# FASCICULE DE BREVET EUROPEEN

(11) **EP 0 850 791 B1**
(45) Date de publication et mention de la délivrance du brevet: **21.03.2001**
(21) Numéro de dépôt: 97403146.0
(22) Date de dépôt: 23.12.1997
(51) Int. Cl.: B60H 1/03, B60H 1/14, F01P 3/20, F02M 31/20, F02M 53/00, F02M 55/00

(54) **Système de chauffage de l'habitacle d'un véhicule automobile à moteur diesel à injection directe**
Heizungssystem für den Fahrgastraum eines Kraftfahrzeuges mit Dieselmotor mit Direkteinspritzung
Heating system for the passenger compartment of a diesel combustion engine motor vehicle

(30) Priorité: 31.12.1996 FR 9616274
(43) Date de publication de la demande: 01.07.1998
(73) Titulaire: AUTOMOBILES PEUGEOT, 75116 Paris (FR); AUTOMOBILES CITROEN, 92200 Neuilly-sur-Seine (FR)
(72) Inventeur: Brame, Jean-Luc, 94200 Ivry (FR)
(74) Mandataire: Berger, Helmut

(56) Documents cités:
- EP-A- 0 304 742
- DE-A- 3 231 881
- US-A- 3 707 263
- US-A- 4 072 138
- US-A- 5 558 068

## Description

L'invention concerne un système de chauffage de l'habitacle d'un véhicule automobile à moteur diesel à injection directe, du type comprenant une pompe ayant une entrée communiquant avec le réservoir de carburant, une sortie haute pression communiquant avec le moteur et une sortie de retour du carburant au réservoir.

Les moteurs diesel à injection directe utilisés actuellement présentent la particularité d'avoir un rendement nettement amélioré. En particulier, ils dissipent moins de chaleur dans le circuit de refroidissement que les moteurs classiques. Mais ceci entraîne l'inconvénient que le circuit de refroidissement du moteur est insuffisant pour assurer un chauffage correct de l'habitacle. D'autre part, l'alimentation de ces moteurs nécessite des pressions de carburant élevées. De telles valeurs sont atteintes grâce à une pompe haute pression du type susmentionné, qui est entraînée par le moteur. Pour assurer le fonctionnement de cette pompe, on utilise une partie du carburant fourni à la pompe pour lubrifier et refroidir celle-ci. Cette partie de carburant retourne au réservoir.

Un moteur à injection directe avec un dispositif de chauffage est montré dans le document US 3707263 (préambule de la revendication 1).

La présente invention a pour but de proposer un système de chauffage de l'habitacle d'un véhicule automobile à moteur diesel à injection directe, qui apporte une solution au problème de l'insuffisance du chauffage par le circuit de refroidissement du moteur.

Pour atteindre ce but, le système de chauffage selon l'invention est caractérisé en ce qu'il comprend un échangeur de chaleur monté sur la conduite de retour de la pompe au réservoir et permettant au carburant de céder des calories à un fluide utilisé pour le chauffage de l'habitacle.

Selon une caractéristique de l'invention, l'échangeur est disposé dans le circuit de refroidissement du moteur à la sortie de celui-ci.

Selon une autre caractéristique de l'invention, dans un véhicule équipé d'un système de climatisation, l'échangeur de chaleur est situé dans une veine d'air faisant partie ou communiquant avec le système de climatisation.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels .

La figure 1 est une vue schématique d'un système de chauffage selon la présente invention.

La figure 2 illustre l'utilisation du système de chauffage selon l'invention dans un véhicule automobile à moteur diesel à injection directe.

La figure 3 illustre l'utilisation du système de chauffage selon l'invention directement dans un véhicule équipé d'un système de climatisation.

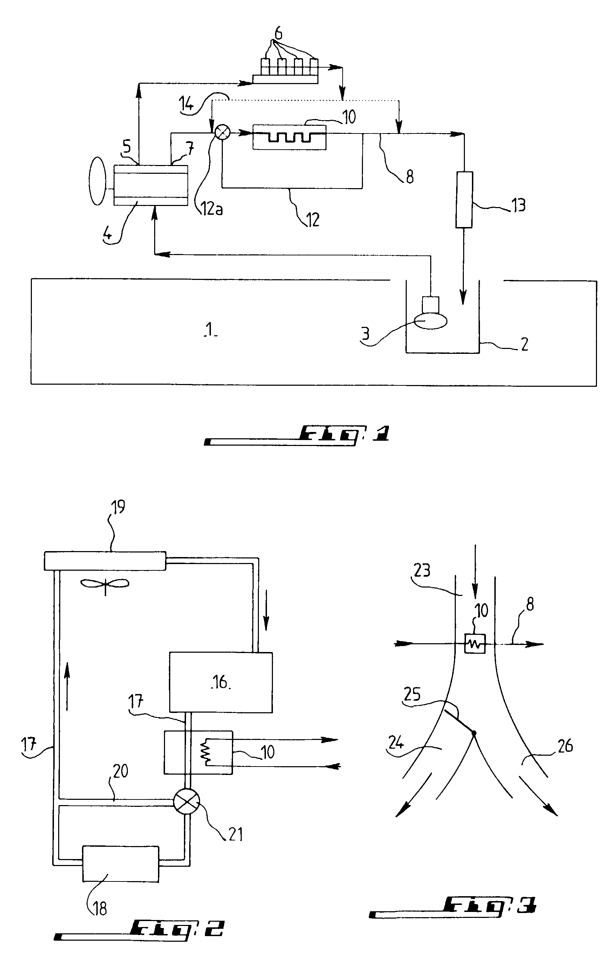

En se référant à la figure 1, les numéros de référence 1 à 3 désignent respectivement le réservoir de gazole d'un véhicule automobile à moteur diesel à injection directe, un bol de réserve positive prévu dans le réservoir et une pompe de gavage 3 qui envoie le gazole puisé dans le bol de réserve à une pompe haute pression 4. Cette dernière comporte une première sortie 5 communiquant avec les injecteurs 6 du moteur et une seconde sortie 7 à laquelle est raccordée une conduite de retour 8 permettant le retour au réservoir de la partie du carburant ayant servi à refroidir et lubrifier la pompe.

Sur cette conduite de retour 8 est monté un échangeur de chaleur 10 qui permet au gazole de céder des calories à un fluide pouvant être utilisé pour le chauffage de l'habitacle du véhicule.

Concernant le bol de réserve positive, il fait partie d'un ensemble de jaugeage-puisage dit "à réserve positive" destiné à éviter le désamorçage de la pompe de gavage 3 lorsque le réservoir est presque vide. Plus précisément, le bol 2, placé au fond du réservoir, constitue un piège servant à retenir du carburant afin de maintenir un niveau suffisant pour que la pompe puisse continuer à fonctionner. Le carburant retournant au réservoir étant envoyé dans le bol 2, il s'ensuit que la température du gazole aspiré par la pompe 3 augmente.

Sur la figure 1, on constate que l'échangeur 10 peut être court-circuité par un conduit de déviation 12 et qu'un deuxième échangeur 13 est monté dans le conduit 8, de préférence en aval du premier échangeur 10. Cet échangeur 13 est indépendant du système de chauffage de l'habitacle.

Il est encore à noter que le retour du gazole des injecteurs au réservoir 1 peut se faire en amont ou en aval de l'échangeur 10, comme cela est indiqué par la ligne pointillée 14. Bien entendu, le lieu du retour peut être prévu lors de l'installation du système ou être sélectionnable à l'aide d'une vanne appropriée (non représentée). Concernant le court-circuitage de l'échangeur 10, celui-ci est commandé par la vanne 12a, visible sur la figure 1.

La figure 2 illustre l'intégration du système selon l'invention dans le circuit de refroidissement d'un moteur. L'échangeur est donc du type gazole/eau, le fluide auquel le gazole cède ses calories étant l'eau du circuit de refroidissement.

Sur la figure 2, les références 16, 17, 18 et 19 désignent respectivement le moteur, le circuit de refroidissement, l'échangeur eau/air du groupe de chauffage et le radiateur habituel. L'échangeur 18 peut être court-circuité par un conduit 20, au moyen d'une vanne 21.

Dans l'ensemble selon la figure 2, l'échangeur 10 apporte des calories au circuit de refroidissement 17 du moteur. Celui-ci possède sa propre régulation en température constituée par le refroidissement du moteur. Dans le cas d'une utilisation où un chauffage de l'habitacle n'est pas nécessaire, l'échangeur eau/air 18 du groupe de chauffage sera court-circuité comme dans tous les systèmes de chauffage classiques. Dans le cas de véhicules équipés d'une climatisation, la régulation en chauffage sera identique, mais les températures d'eau auront une courbe de montée légèrement différente. Ces différences seront intégrées par les capteurs d'ambiance du véhicule, tels que la sonde de température de l'habitacle. L'effet de l'échangeur 10 est uniquement d'augmenter la température du liquide de refroidissement à la sortie du moteur. Le reste du système est classique.

La figure 3 montre le cas où l'échangeur 10 du système de chauffage est placé directement dans le groupe de climatisation. Il est alors du type gazole/air. Dans ce cas, la conduite de gazole 8 traverse une veine d'air 23 faisant partie ou communiquant avec le système de climatisation du véhicule en 24. Un volet 25 est prévu pour permettre d'évacuer sélectivement vers l'extérieur en 26 au moins une partie de l'air circulant dans la veine 23, quand il n'y a pas de besoin en calories dans l'habitacle, tout en assurant l'échange thermique de façon à refroidir le gazole et ne pas modifier les paramètres du refroidissement de celui-ci. Si le refroidissement du gazole n'était pas nécessaire ou était assuré par un autre système, on pourrait alors court-circuiter l'échangeur 10.

Il ressort clairement de la description de l'invention qui vient d'être faite que celle-ci procure un apport calorique supplémentaire à l'habitacle en utilisant les calories de la partie du gazole qui a servi pour lubrifier et refroidir la pompe haute pression. De façon approximative, la température du gazole pourra atteindre des valeurs de 70 à 100°C selon les endroits où l'on mesure cette température. Ces températures élevées posent des problèmes évidents de choix de matériaux utilisables pour toutes les pièces en contact avec ce gazole chaud. L'emploi de l'échangeur 10 présente donc aussi l'avantage de refroidir le gazole et d'apporter une solution au problème occasionné par les températures élevées susmentionnées. En cas de court-circuit de l'échangeur 10, l'échangeur de chaleur supplémentaire 13 permet d'abaisser la température du gazole renvoyé dans le réservoir.

## Revendications

1. Système de chauffage de l'habitacle d'un véhicule automobile à moteur diesel à injection directe, du type comprenant une pompe ayant une entrée communiquant avec le réservoir de carburant, une sortie haute pression communiquant avec le moteur caractérisé en ce qu'il comprend une sortie de retour du carburant au réservoir, un échangeur de chaleur (10) monté sur la conduite de retour (8) de la pompe (4) au réservoir (1) et permettant au carburant de céder des calories à un fluide utilisé pour le chauffage de l'habitacle.

2. Système de chauffage selon la revendication 1, caractérisé en ce qu'il prévoit un retour du carburant du moteur au réservoir (1) en amont ou en aval de l'échangeur (10).

3. Système de chauffage selon l'une des revendications 1 ou 2, caractérisé en ce que l'échangeur (10) est disposé dans le circuit de refroidissement (17) du moteur à la sortie de celui-ci.

4. Système de chauffage selon l'une des revendications 1 ou 2, caractérisé en ce que l'échangeur de chaleur (10) est situé dans une veine d'air (23) faisant partie ou communiquant avec le système de climatisation du véhicule.

5. Système de chauffage selon la revendication 4, caractérisé en ce qu'il comprend des moyens (25, 26) pour sélectivement évacuer vers l'extérieur au moins une partie de l'air circulant dans la veine précitée (23).

6. Système de chauffage selon la revendication 5, caractérisé en ce que les moyens d'évacuation sélectifs précités sont formés par un volet (25) monté à l'entrée d'une conduite d'évacuation (26).

7. Système de chauffage selon l'une des revendications précédentes, caractérisé en ce qu'il comprend des moyens (12) pour court-circuiter l'échangeur (10).

8. Système de chauffage selon la revendication 7, caractérisé en ce qu'il comprend un deuxième échangeur (13) indépendant du système de chauffage de l'habitacle et situé de préférence en aval de l'échangeur (10) dans la conduite (8).

## Patentansprüche

1. Heizsystem für Insassenkabine eines Kraftfahrzeugs mit Dieselmotor mit Direkteinspritzung, der Art, umfassend eine Pumpe mit einem Einlaß, der mit dem Kraftstofftank in Verbindung steht, eine Art Hochdruckausgang, der mit dem Motor in Verbindung steht, dadurch gekennzeichnet, daß es eine Art Kraftstoffrücklauf zum Tank umfaßt, einen Wärmeaustauscher (10), der auf dem Rücklaufschlauch (8) der Pumpe (4) zum Tank (1) angebracht ist und es dem Kraftstoff ermöglicht, Kalorien an eine Flüssigkeit abzugeben, die für die Heizung der Insassenkabine eingesetzt wird.

2. Heizsystem gemäß Anspruch 1, dadurch gekennzeichnet, daß es einen Rücklauf des Kraftstoffs des Motors zum Tank (1) oberhalb und unterhalb des Austauschers (10) vorsieht.

3. Heizsystem gemäß Anspruch 1 oder 2, dadurch gekennzeichnet, daß der Austauscher (10) im Kühlkreislauf (17) des Motors am Ausgang desselben angeordnet ist.

4. Heizsystem gemäß Anspruch 1 oder 2, dadurch gekennzeichnet, daß der Wärmeaustauscher (10) sich in einer Luftleitung (23) befindet, die zur Klimaanlage des Fahrzeugs gehört oder mit ihr in Verbindung steht.

5. Heizsystem gemäß Anspruch 4, dadurch gekennzeichnet, daß es Mittel (25, 26) zum selektiven Austrag nach außen wenigstens eines Teils der in vorgenannter Luftleitung (23) zirkulierenden Luft umfaßt.

6. Heizsystem gemäß Anspruch 5, dadurch gekennzeichnet, daß die vorgenannten selektiven Austragsmittel durch eine Klappe (25) gebildet werden, die am Einlaß einer Austragsleitung (26) angebracht ist.

7. Heizsystem gemäß einem der vorgenannten Ansprüche, dadurch gekennzeichnet, daß es Mittel (12) zum Kurzschließen des Austauschers (10) umfaßt.

8. Heizsystem gemäß Anspruch 7, dadurch gekennzeichnet, daß es einen zweiten Austauscher (13) umfaßt, der vom Heizsystem der Insassenkabine unabhängig ist und sich bevorzugt unterhalb des Austauschers (10) in der Leitung (8) befindet.

## Claims

1. Heating system for the passenger compartment of a direct injection diesel engine motor vehicle, of the type comprising a pump having an inlet that communicates with the fuel tank, a high pressure outlet that communicates with the engine, characterized in that it comprises a return outlet of the fuel to the tank, a heat exchanger (10) mounted in the return duct (8) of the pump (4) to the tank (1) and enabling the fuel to give up calories to a fluid used for heating the passenger compartment.

2. Heating system according to claim 1, characterized in that a return of the fuel from the engine to the tank (1) is provided upstream or downstream the heat exchanger (10).

3. Heating system according to one of claims 1 or 2, characterized in that the heat exchanger (10) is arranged in the cooling circuit (17) of the engine at the output thereof.

4. Heating system according to one of claims 1 or 2, characterized in that the heat exchanger (10) is located in an air stream (23) which is a part of or communicates with the air conditioning system of the vehicle.

5. Heating system according to claim 4, characterized in that it comprises means (25, 26) for selectively exhausting to the outside at least a part of the air that circulates in the above mentioned stream (23).

6. Heating system according to claim 5, characterized in that the above mentioned selective exhausting means are formed by a flap (25) which is mounted at the inlet of an exhausting duct (26).

7. Heating system according to one of the preceding claims, characterized in that it comprises means (12) for bypassing the heat exchanger (10).

8. Heating system according to claim 7, characterized in that it comprises a second heat exchanger (13), independent from the passenger compartment heating system and located preferably upstream the heat exchanger (10) in the duct (8).
